# EUROPÄISCHE PATENTSCHRIFT

(11) **EP 1 539 540 B1**
(45) Veröffentlichungstag und Bekanntmachung des Hinweises auf die Patenterteilung: **02.01.2008**
(21) Anmeldenummer: 03773619.6
(22) Anmeldetag: 05.09.2003
(51) Int. Cl.: B60R 19/34

(54) **POLYMERER ENERGIEABSORBER FÜR KRAFTFAHRZEUGE UND STOSSFÄNGERSYSTEM**
POLYMER ENERGY ABSORBER FOR MOTOR VEHICLES AND BUMPER SYSTEM
DISPOSITIF POLYMERE ABSORBANT L'ENERGIE POUR VEHICULES ET SYSTEME DE PARE-CHOCS

(30) Priorität: 19.09.2002 DE 10243460
(43) Veröffentlichungstag der Anmeldung: 15.06.2005
(73) Patentinhaber: REHAU AG + Co, 95111 Rehau (DE)
(72) Erfinder: STEEG, Claus-Christian, 08606 Oelsnitz (DE); RIEPENHAUSEN, Holm, 95111 Rehau (DE); KÜHL, Elmar, 74239 Hardthausen (DE)
(86) Internationale Anmeldenummer: PCT/EP2003/009853
(87) Internationale Veröffentlichungsnummer: WO 2004/028880

(56) Entgegenhaltungen:
- EP-A- 0 497 142
- FR-A- 2 777 251
- FR-A- 2 789 358
- US-A- 5 074 391

## Beschreibung

Die Erfindung betrifft einen polymeren Energieabsorber für Kraftfahrzeuge, welcher die kinetische Energie, die bei Unfällen von Kraftfahrzeugen frei wird, durch Absorption aufnimmt und gezielt abführt. Hierzu wird der polymere Energieabsorber in Stoßfängersystemen und/oder -anordnungen von Kraftfahrzeugen eingebaut.

Aus dem Stand der Technik sind verschiedenartige Energieabsorber für den Einsatz im vorderen und/oder hinteren Stoßfängerbereich von Kraftfahrzeugen bekannt und werden zurzeit eingesetzt. Die verwendeten Energieabsorber weisen ein konstruktiv- und materialbedingtes unterschiedliches Energieabsorptionsvermögen und - verhalten für Aufprallgeschwindigkeiten im Bereich von typischerweise 5 bis 15 km/h auf.

Aufgrund der räumlichen Einbausituation von Energieabsorbern im vorderen oder hinteren Kraftfahrzeugbereich werden von den Kraftfahrzeugherstellern Systeme bevorzugt, die die kinetische Energie zum Zeitpunkt des Schadensereignisses in einer möglichst idealen Kraft-Weg-Kennlinie aufnehmen und nach einem anfänglich steilen Kraftanstieg, bei zeitlich fortschreitender Energieabsorption, in ein konstantes Kraftniveau überführen, so dass das Integral ∫ F*ds unter der Kraft-Weg-Kennlinie maximal wird.

Im Stand der Technik werden reversible und irreversible Energieabsorbersysteme für Kraftfahrzeuge beschrieben. Ein Beispiel für reversible Energieabsorber sind hydraulische Dämpfungselemente, die mediumabhängig ein unterschiedliches Ansprechverhalten im Crashfall zeigen. Diese hydraulischen Dämpfungselemente sind hinsichtlich ihrer technischen Auslegung komplex und das Gewicht entspricht nicht den heutigen Anforderungen der Kraftfahrzeughersteller.

Hinsichtlich der irreversibel wirkenden Energieabsorber für Kraftfahrzeuge sind Anordnungen bekannt, die aus plastisch verformbaren Metallelementen wie z.B. aus Hohlprofilen mit Metallschäumung (Aluminiumschaum) bestehen und durch die Dichte der Metallschaumfüllung das Energieabsorptionsverhalten wesentlich bestimmen. Diese irreversiblen Energieabsorber sind aufwändig und kostenintensiv in der Herstellung.

In diesem Zusammenhang sind auch Kombinationen aus reversiblen und irreversiblen E-nergieabsorberelementen im Stand der Technik beschrieben.

Die FR-A-2789358 beschreibt eine Energieabsorbervorrichtung für schienengebundene Fahrzeuge mit einem Rohrgehäuse , befestigt an einem Schienenfahrzeug, als Energiepuffer.

Weiterhin sind verschiedenartige Energieabsorber für Kraftfahrzeuge bekannt, die ein unterschiedliches Energieabsorptionsvermögen besitzen und zwischen dem Längsträger und dem Stoßfängerträger als sogenannte Crash-Boxen oder Typschadenhalter in einer Stoßfängeranordnung zum Einsatz kommen. Die Crashboxen absorbieren zusätzlich zum Stoßfängerträger die Aufprallenergie und werden durch die geleistete Verformungsarbeit irreversibel verändert. Diese Energieabsorber dienen dem Schutz der Fahrzeugstruktur und führen bis zu Geschwindigkeiten von 15 km/h die Aufprallenergie im Schadensereignisfall ab.

In der Patentschrift DE 2509265 C2 sind wabenartige Deformationsglieder beschrieben, die aus Metall oder Kunststoff bestehend, an der Stoßstange befestigt, zum Einsatz kommen. Der Einbau der Deformationsglieder erfolgt in Kraftfahrzeuglängsrichtung und die Deformationsglieder nehmen in einer Unfallsituation die Kraftspitze durch ihre wabenförmige Struktur energieabführend auf. Nachteilig ist die technische Herstellung der Wabenstruktur in den unterschiedlichen Materialausführungen und deren Verbindungstechnik, die insbesondere bei Verwendung von polymeren Materialien zu hohen konstruktiv bedingten Herstellungskosten führt und eine geringere formschlüssige Verbindung mit den Aufnahmeelementen der Stoßfängereinheit in zukünftigen Kraftfahrzeugen unter den vorgegebenen Einbausituationen gestattet.

Ein weiteres energieabsorbierendes Element zur dynamischen Aufnahme der Stoßenergie während einer Fahrzeugkoliisionsphase ist in der Patentschrift DE 3833048 C2 offenbart. Diese Anordnung besteht aus Prallrohren, die profilförmig stranggezogen sind und aus Faserverbundwerkstoffen mit einem Matrixwerkstoff aus der Gruppe der Epoxydharze, der Phenolharze oder der Vinylesterharze zusammengesetzt sind und koaxial zueinander formschlüssig mit der Kraftfahrzeugkarosserie verbunden werden. Der Nachteil dieser Anordnung besteht in einer reduzierten Kraftaufnahme im Falle der Stoßbelastung in Kraftfahrzeuglängsrichtung durch die räumliche Anordnung der Prallrohre.

Aus der Patentschrift DE 4401805 A1 sind Pralldämpfer mit geschwindigkeitsabhängiger Energieumsetzung bekannt. Zur Energieumsetzung enthalten diese Pralldämpfer fluidgefüllte Druckkammern, die im Falle einer Fahrzeugkollision die fluidgefüllten Pralldämpferelemente in Längsrichtung verformen und durch die Kompressionsrückstellwirkung des gewählten Fluids eine Energiedissipation bewirken. Nachteilig an dieser Ausführung ist das Gewicht der fluidgefüllten Pralldämpfer .

In der Patentschrift DE 10015294 C2 wird ein reversibles Deformationselement beschrieben, das eine Vorrichtung zur Stoßenergieaufnahme mittels Rohrbuchse zeigt, die mit einer elastischen, das Rohr umfassenden Manschette versehen ist , aus einer Formgedächtnislegierung besteht und auf Basis des physikalischen Memory-Effektes wirkt. Hierbei wird im Falle der Stoßeinwirkung die außen anliegende Manschette radial aufgeweitet und bedingt durch die Eigenschaft der Formgedächtnislegierung wirkt der Material-Memory-Effekt der Manschettenaufweitung zeitverzögert entgegen, so dass die Deformationsenergie retardiert abgebaut werden kann. Die radial und zeitverzögert wirkende Energieabsorption führt gesamthaft zu einem geringeren Ansprechverhalten der Energieabsorbereinheit im Crashfall und wird, verbunden mit den hohen Materialkosten der Formgedächtnisiegierung, den zukünftigen Kraftfahrzeugherstelleranforderungen nicht gerecht.

Die Patentschrift DE 3232940 C2 zeigt einen Stoßfänger für Kraftfahrzeuge, bestehend aus einem fahrzeugfesten Teil mit biegesteifen Trägerelementen und seitlich abgebogenen Endbereichen, dem eine wellenförmige Blattfeder vorgelagert ist. Die Blattfeder einschließlich Trägereinheit ist einstückig aus Kunststoff ausgeführt.

Weiterhin ist in der Patentschrift DE 19806541 A1 eine Stoßfängeranordnung offenbart, die Kunststoffschaumschichten in unterschiedlicher Dichte vorsieht und das Energieabsorptionsverhalten auf zwei Kraftniveaus realisiert, d.h. einen crashbedingten Aufprall in zwei unterschiedliche Energieabsorptionsniveaus überführt.

Neben den genannten Nachteilen aus dem Stand der Technik, zeigen die bisher eingesetzten Energieabsorber in Kraftfahrzeugen ein unregelmäßiges Energieaufnahmeverhalten, verbunden mit einer geringeren durchschnittlichen Energieabsorption, die im Kraft-Weg-Verhalten zu einer Zeitverzögerung führen und gesamthaft das zeitliche Ansprechvermögen der Energieabsorbereinheit nachteilig beeinflussen. Weiterhin werden Konstruktionen energieabsorbierender Systeme für Kraftfahrzeuge vorgeschlagen, die den Gewichtsbedingungen, die an zukünftige Kraftfahrzeuggenerationen gestellt werden, nicht entsprechen.

Die zukünftigen technischen Anforderungen an Energieabsorber und -systeme für Kraftfahrzeuge werden durch die Faktoren
- hohe Effizienz des Systems im Schadensereignisfall,
- kleiner werdender Einbauraum,
- hohe Reproduzierbarkeit der Energieumwandlung,
- Montagefreundlichkeit beim Austausch oder Ersatz,
- Stabilität gegenüber klimatischen Einflüssen und
- Recyclingfähigkeit
   bestimmt.

Der Erfindung liegt daher die Aufgabe zugrunde, die beschriebenen Nachteile aus dem Stand der Technik zu verbessern und einen Energieabsorber für Kraftfahrzeuge zu schaffen, der den zukünftigen Anforderungen an ein Energieabsorptionsverhalten entgegenkommt, so dass die kinetische Energie im Falle eines Schadensereignisses am Front- oder Heckbereich eines Kraftfahrzeuges auf minimalem Raum abgeführt werden kann.

Dieses System sollte einfach in der konstruktiven Auslegung sein und die von außen einwirkenden Kräfte im Schadensereignisfall optimal abbauen und somit den Schutz der Rahmen-/Karosserietragstruktur bis zu Aufprallgeschwindigkeiten von 20 km/h gewährleisten.

Es wurde ein Energieabsorber für Kraftfahrzeuge gefunden, der die vorgenannten Anforderungen hinsichtlich hoher Effizienz im Schadensereignisfall bei kleiner werdendem Einbauraum, verbunden mit hoher Reproduzierbarkeit der Energieumwandlung erfüllt, gegenüber klimatischen Einflüssen langzeitstabil ist und einen preiswerten Austausch/Ersatz unter Recyclinganforderungen gewährleistet.

In diesem Erfindungszusammenhang ist weiterhin ein Stoßfängersystem gefunden worden, das durch die gewählte seitlich beabstandete Anordnung der Energieabsorber und verbunden mit deren besonderen Form und Anbindung an die Tragstrukturen des Kraftfahrzeuges, die kinetische Energie im Geschwindigkeitsbereich von bis zu 20 km/h im Schadensereignisfall entlang eines vorgegebenen Energieabsorptionsweges im Vergleich zu bisher bekannten Systemen verbessert und zielgerichtet abführt.

Gegenstand der Erfindung ist ein Energieabsorber für Kraftfahrzeuge gemäß Anspruch 1.

Entsprechend der technischen Auslegung, wie Kraftfahrzeuggewicht, Einbauraumsituation und Kraftfahrzeugtyp, werden rohrförmige thermoplastische oder duroplastische Werkstoffe für den erfindungsgemäßen Energieabsorber verwendet.

Das rohrförmige Polymermaterial für den polymeren Energieabsorber für Kraftfahrzeuge besteht vorzugsweise aus einem der Werkstoffe der Gruppe der Polyvinylchloride (PVC), Polyethylene (PE), Polypropylene (PP), Polyamide (PA), Polycarbonate (PC), Polyethylenterephthalate (PET), Polybutylenenterephthalate (PBT), Polymethylmethacrylate (PMMA), Polyoxymethylene (POM), Styrolcopolymerisate (Acrylnitril-Styrol-Butadin-Copolymer und Copolymer aus Styrol und Acrylnitril), Blends (ABS/PC und PBT/PC) oder aus Hochleislungspolymerwerkstoffen wie Polyetherketone (PEK, PEEK), Polyimide sowie aus deren Copolymeren.

Gemäß einer vorteilhaften Ausführungsform werden auch Mischpolymere der vorgenannten Art als Werkstoff für den rohrförmigen polymeren Energieabsorber für Kraftfahrzeuge verwendet.

In einer vorteilhaften Weiterbildung nach Anspruch 6, wird durch die Zugabe von anorganischen Füllstoffen, wie Kreide, Talkum, Kohlefasern, Glasfasern, Glimmer, Silikaten, Aluminiumnitrit und -silikat und metallische Mikropartikel, die mechanische

Festigkeit und Steifigkeit des rohrförmigen Polymermaterials für den erfindungsgemäßen Energieabsorber entscheidend beeinflusst. Der Anteil der anorganischen Füllstoffe liegt im Bereich von 3 bis 40 Gewichtsprozenten, bezogen auf das MolGewicht des verwendeten Polymermaterials des Energieabsorbers.

Besonders bevorzugt sind in einer weiteren Ausgestaltung der Erfindung Nano-Füllstoffe, wie TiO₂ , Ruß, Kieselsäure und Tonmineralien, mit Partikelgrößen von 80-150 nm und einem Füllstoffanteil von 3-15 Gewichtsprozenten, bezogen auf das Molgewicht des verwendeten rohrförmigen Polymermaterials des Energieabsorbers, die den in Anspruch 3 bis 5 aufgeführten polymeren Werkstoffen zugegeben werden.

Damit steht ein breites Spektrum von polymeren Werkstoffen für den erfindungsgemäßen Energieabsorber zur Verfügung, der verbunden mit dem konstruktiven Aufbau der spanabtragenden Elemente, das Energieabsorptionsverhatten im Crashfall bestimmt.

Der Rohraußendurchmesser des polymeren Energieabsorbers liegt zwischen 4 bis 10 cm und umfasst eine Rohrwandstärke von 0,5 bis 10 cm (entsprechend Vollmaterialstärke) und die Rohrgesamtlänge (gleich Absorptionsweglänge) liegt im Bereich von 35 bis 200 mm, entsprechend der Auslegung für eine Energieabsorption von bis zu 20 kJ.

In einer bevorzugten Ausführungsform eines rohrförmigen polymeren Energieabsorbers liegt die Rohrgesamtlänge nach Anspruch 11 im Bereich von 100 -170 mm und ist abhängig von der konstruktiv vorgegebenen Einbauraumsituation des Kraftfahrzeuges, der zu absorbierenden Energie und der Auslegung für einen Crash-Geschwindigkeitsbereich von bis zu 20 km/h.

Eine weitere vorteilhafte Erfindungsausgestaltung sieht einen Mehrschichtaufbau, bestehend aus polymeren Werkstoffen, des rohrförmigen Energieabsorbers vor. Hierzu werden mehrere Schichten, mindestens jedoch zwei, gleicher und/oder verschiedener Schichtdicken aus gleichen und/oder unterschiedlichen polymeren Werkstoffen bestehend, verwendet.

Die polymere Einzelschicht kann aus Polyvinylchlorid (PVC), Polyethylen (PE), Polypropylen (PP), Polyamid (PA), Polycarbonat (PC), Polyethylenterephthalat- (PET), Polybutylenenterephthalat (PBT), Polymethylmethacrylat (PMMA), Polyoxymethylen (POM), Styrolcopolymerisat (Acrylnitril-Styrol-Butadin-Copolymer und Copolymer aus Styrol und Acrylnitril), Blends (ABS/PC und PBT/PC) oder aus Hochleistungspolymeren wie Polyetherketon (PEK, PEEK), Polyimid sowie aus deren Copolymeren bestehen.

Die Dichte der verwendeten unterschiedlichen thermoplastischen und/oder duroplastischen Werkstoffe für den Mehrschichtaufbau des polymeren Energieabsorbers umfasst den Bereich von 0,82 bis 1,48 g/cm³.

Zur Verbesserung der Querkraftsteifigkeit des erfindungsgemäßen Energieabsorbers in diesem Zusammenhang werden metallische Einlagen und/oder Gewebearmierungen (Gaze) ganzflächig oder partiell auf eine innere Trägerschicht - auch in einem Mehrschichtaufbau - aufgebracht. Die eingesetzten metallischen Einlagen und/oder Gewebearmierungen bewirken zusätzlich eine Reduzierung der Wärmeausdehnung des rohrförmigen polymeren Energieabsorbers und gewährleisten dessen Formstabilität gegenüber klimatischen Einflüssen.

Darüber hinaus gewährleisten die eingesetzten metallischen Einlagen und/oder Gewebearmierungen im Falle eines Crashs die Formstabilität des rohrförmigen polymeren Energieabsorbers.

Denkbar in diesem Erfindungszusammenhang ist auch die Beschichtung eines rohrförmigen aus Metall bestehenden Grundkörpers mit den vorgenannten Polymerschichten, so dass diese aufgebrachten Polymerschichten als energieabsorbierende Zerspanungsschicht für die Verwendung als hybrider polymerer Energieabsorber zur Anwendung kommen.

Grundsätzlich ist die Form des erfindungsgemäßen Energieabsorbers nicht auf rohrförmige Elemente begrenzt, denkbar sind auch kreisförmige, U-förmige, trapezförmige, rechteckförmige oder ellipsenförmige geometrische Querschnitte.

Die Herstellung des rohrförmigen polymeren Energieabsorbers für Kraftfahrzeuge, auch der mit Polymermaterial beschichteten, erfolgt einfach und kostengünstig im Extrusions-, Coextrusions- und/oder Spritzgussverfahren.

Die Crash-Energieaufnahme im Bereich von 2 bis 20 kJ für Aufprallgeschwindigkeiten bis 20 km/h wird durch die Verwendung eines im Gewicht leichten und rohrförmig ausgebildeten Polymermaterials des Energieabsorbers und durch die spanabtragenden Elemente, die umfänglich , form- und stoffschlüssig entlang der mittigen Öffnung der metallischen Grundplatte mit Flansch angeordnet sind und das rohrförmige Polymermaterial kraftschlüssig umfassen, erreicht. Dazu wird entlang der Längsrichtung der Polymerrohroberfläche des erfindungsgemäßen Energieabsorbers mittels spanabtragender Elemente eine Energieabsorption durch Materialabtragung bewirkt.

Die zu absorbierende Energie ist von dem verwendeten polymeren Werkstoff, von der Anzahl, der geometrischen Form und der Schnitttiefe/Eindringtiefe der spanabtragenden Elemente abhängig. Die spanabtragenden Elemente, in Verbindung mit dem rohrförmigen polymeren Werkstoff des erfindungsgemäßen Energieabsorbers, beeinflussen damit die Energieabsorption in besonderem Maße.

Insbesondere lassen sich die Kraft-Weg-Kennlinien, d.h. integral gesehen die Energieabsorption, durch die Anzahl und die Form der spanabtragenden Elemente in einem variablen Energieabsorptionsbereich von bis zu 20 kJ einstellen, so dass die unterschiedlichen Gegebenheiten der Kraftfahrzeuge, wie Kraftfahrzeuggewicht und Einbauraumsituation, berücksichtigt werden.

Denkbar ist erfindungsgemäß auch eine Anordnung, in der die spanabtragenden Elemente entlang der rohrförmigen Innenoberfläche des polymeren Energieabsorbers wirken oder in einer Kombinationsanordnung, an der Außen- und Innenoberfläche. Die Energieabsorption erfolgt dann in axialer Richtung entlang der Innenoberfläche bzw. in der kombinierten Anordnung entlang der Außen- und Innenoberfläche des polymeren Energieabsorbers.

Die Anzahl der spanabtragenden Elemente liegt im Bereich von 4 bis 40. Experimentell als besonders vorteilhaft erwiesen sich 8 bis 16 symmetrisch und äquidistant umfänglich angeordnete spanabtragende Elemente. Dabei ist die symmetrische und äquidistante Anordnung in einer ersten Erfindungsausgestaltung nicht begrenzend zu sehen.

Der Abstand der einzelnen spanabtragenden Elemente zueinander liegt im Bereich von 2,5 bis 25% bezogen auf den rohrförmigen polymeren Energieabsorberaußen- oder -innenumfang und ist abhängig von der Anzahl, der Länge und der gewählten Anordnung der spanabtragenden Elemente.

Die spanabtragenden Elemente sind rechteck-, dreieck-, trapez-, mehreck- und/oder halbrundförmig geformt und bilden einen Spanungswinkel relativ zur Normalen der rohrförmigen polymeren Energieabsorberaußen- oder -innenoberfläche von 45 - 90 Grad.

Aus verschiedenen Crash-Experimenten und -Simulationen ergab sich eine bevorzugte Länge der einzelnen spanabtragenden Elemente von 0,5-3 cm, angepasst an die Rohrwandstärke des polymeren Energieabsorbers, wodurch Materialeindringtiefen Δd von 0,15 bis 1,5 cm im Crashfall erreicht wurden.

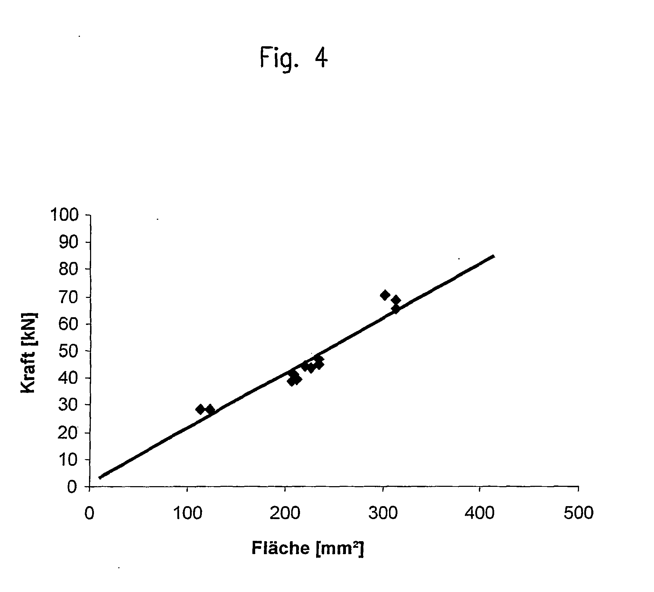

Das Verhältnis von Kraftniveau zum flächenhaften Materialabtrag eines polymeren Energieabsorbers ist bspw. für Polyamid in Fig. 4 dargestellt. Hierbei wird für ein Kraftniveau von 70 kN eine Gesamtfläche von 320 mm² aus der polymeren Rohroberfläche des erfindungsgemäßen Energieabsorbers materialspanend abgetragen. Das in diesem Zusammenhang dargestellte Kraftniveau zu Flächenverhältnis zeigt für Kraftniveaus im Bereich von 10 bis 90 kN eine lineare Abhängigkeit des flächenhaften Materialabtrages, der in diesem Beispiel durch acht spanabtragende Elemente bewirkt wird.

Die zur Anwendung kommenden Materialien für die spanabtragenden Elemente sind Metalle, wie Aluminium, Titan, Eisen etc. oder Metalllegierungen oder Keramiken.

Eine metallisch ausgeführte Führungshülse, die auch in einer Kunststoff- oder Kunststoff-Metallausführung vorliegen kann, lässt gesamthaft durch die einstückige Verbindung an der Grundplatte mit Flansch, nur eine axiale Bewegung des rohrförmigen polymeren Energieabsorbers zu und wirkt im Crashfall als Momentenabstützung.

Weiterer Gegenstand der Erfindung ist ein Stoßfängersystem für Kraftfahrzeuge. Das Stoßfängersystem besteht aus mindestens zwei erfindungsgemäßen Energieabsorbern nach Patentanspruch 1-28 und wird abhängig von der vorliegenden Einbausituation im Kraftfahrzeug, vor den Fahrzeuglängsträgern angeordnet. Die Befestigung der polymeren Energieabsorber erfolgt form- und/oder kraftschlüssig mittels einer Flanschverbindung der Grundplatte des Energieabsorbers an eine dahinterliegende Fahrzeugstruktur und gewährleistet, dass die Verbindung für Ein- und/oder Ausbauzwecke gelöst und wiederhergestellt werden kann. Die Verbindung, mit bspw. dem Längsträger, erfolgt durch Befestigungselemente.

In einer vorteilhaften Weiterbildung des Stoßfängersystems, wird der Energieabsorber einstückig mit dem Stoßfängerträger ausgeführt. Die Verbindung des polymeren Rohrs des Energieabsorbers an den Stoßfängerträger erfolgt dabei form- und stoffschlüssig oder nach konstruktiven Vorgaben form- und kraftschlüssig.

Das erfindungsgemäße einstückige Stoßfängersystem in Verbindung mit dem polymeren Energieabsorber ermöglicht somit eine unter Kostenaspekten optimierte Auslegung, die auch die zugehörigen Komponenten betreffen, so dass gesamthaft die Herstellungskosten reduziert werden können. Besonders vorteilhaft ist die Montagefreundlichkeit im Falle der werksseitigen Befestigung am Kraftfahrzeug bzw. im Reparaturfall, bedingt durch die einfache Auslegung. Darüber hinaus erfüllt das Stoßfängersystem die Anforderungen der Kraftfahrzeughersteller an den kleiner werdenden Einbauraum, bei gleichzeitig verbesserter und reproduzierbarer Energieabsorption.

Insbesondere die unterschiedliche Wahl der Länge eines polymeren Energieabsorbers, angepasst an die verschiedenen Kraftfahrzeugtypen, gewährleistet daher eine optimale Nutzung der vorgegebenen Einbauräumlichkeiten. Die Möglichkeit der Verwendung von unterschiedlichen polymeren Werkstoffen für den erfindungsgemäßen Energieabsorber, in Verbindung mit dem Stoßfängersystem, führt zur Reduktion des Kraftfahrzeuggewichtes, ohne Verlust der Sicherheitserfordernisse in Unfallsituationen.

Auch unter Umweltaspekten und den internationalen Recyclinganforderungen bietet die vorgeschlagene Erfindung Vorteile, da die zur Anwendung kommenden polymeren Werkstoffe im Rahmen der Kraftfahrzeugteileentsorgung einer weiteren Verwendung zugeführt werden können.

Grundsätzlich ist anzumerken, dass die Erfindung auch für den Heckbereich eines Kraftfahrzeuges zur Anwendung kommen kann.

Die Erfindung wird nachfolgend anhand der Figuren und Beispiele, welche jedoch keine Beschränkung der Erfindung darstellen, näher erläutert. Weitere Vorteile und vorteilhafte Ausgestaltungen der Erfindung ergeben sich aus den Patentansprüchen .

Es zeigen:
- Fig.1: Die prinzipielle Ansicht eines Stoßfängersystems mit einem erfindungsgemäßen rohrförmigen polymeren Energieabsorber im Frontbereich eines Kraftfahrzeuges.
- Fig.2a: Einen Längsschnitt durch einen erfindungsgemäßen rohrförmigen polymeren Energieabsorber vor einer Crashsituation.
- Fig.2b: Einen Längsschnitt durch einen erfindungsgemäßen rohrförmigen polymeren Energieabsorber nach einer Crashsituation.
- Fig.2c: Einen Querschnitt des rohrförmigen polymeren Energieabsorbers im Zustand vor dem Crash.
- Fig.2d: Einen Querschnitt des rohrförmigen polymeren Energieabsorbers im Zustand nach dem Crash.
- Fig.2e: Eine Darstellung der Materialeindringtiefe nach dem Crash.
- Fig.3a-h: Verschiedene geometrische Formen von spanabtragenden Elementen für die Außen- oder Innenanordnung.
- Fig.4: Ein Kraft-Flächen-Verhältnisdiagramm für das Material Polyamid eines polymeren Energieabsorbers.
- Fig.5: Eine Anbindung des polymeren Energieabsorbers an eine Stoßfängeranordnung.

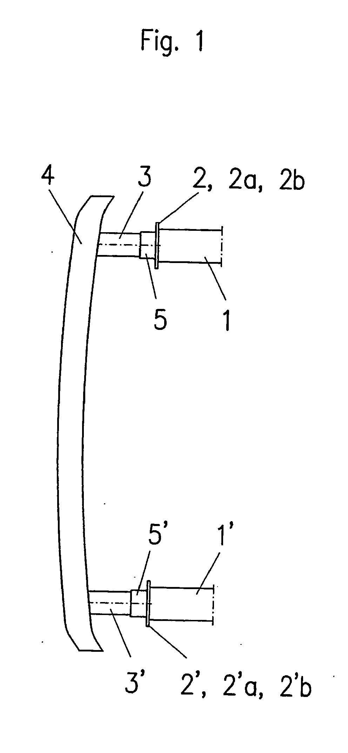

In Fig. 1 ist die prinzipielle Ansicht eines Stoßfängersystems mit einem erfindungsgemäßen rohrförmigen polymeren Energieabsorber im Frontbereich eines Kraftfahrzeuges dargestellt. Es besteht aus einem vorderen Stoßfängerträger 4, mit zwei an den Enden des vorderen Stoßfängerträgers 4 angebrachten rohrförmigen polymeren Energieabsorbern 3,3'. Jeder rohrförmige polymere Energieabsorber 3,3' wird mittels einer metallischen Grundplatte 2,2' mit Flansch 2a,2a' und spanabtragenden Elementen 2b,2b', die in dieser Detaillierungsstufe der Zeichnung nicht dargestellt sind, an einer Fahrzeugstruktur 1 verbunden. Beim Überschreiten einer bestimmten kritischen Kraftbelastung im Crashfall, werden die rohrförmigen polymeren Energieabsorber 3,3' durch die spanabtragenden Elemente 2,2b' der metallischen Grundplatte 2,2' in Oberflächenlängsrichtung materialabtragend zerspant.

Hierbei wird die Energieabsorption mittels Materialabtragung durch umfängliches Zerspanen entlang der polymeren Außenoberfläche des Energieabsorbers, der auch aus mehreren polymeren Schichten aufgebaut sein kann, erreicht.

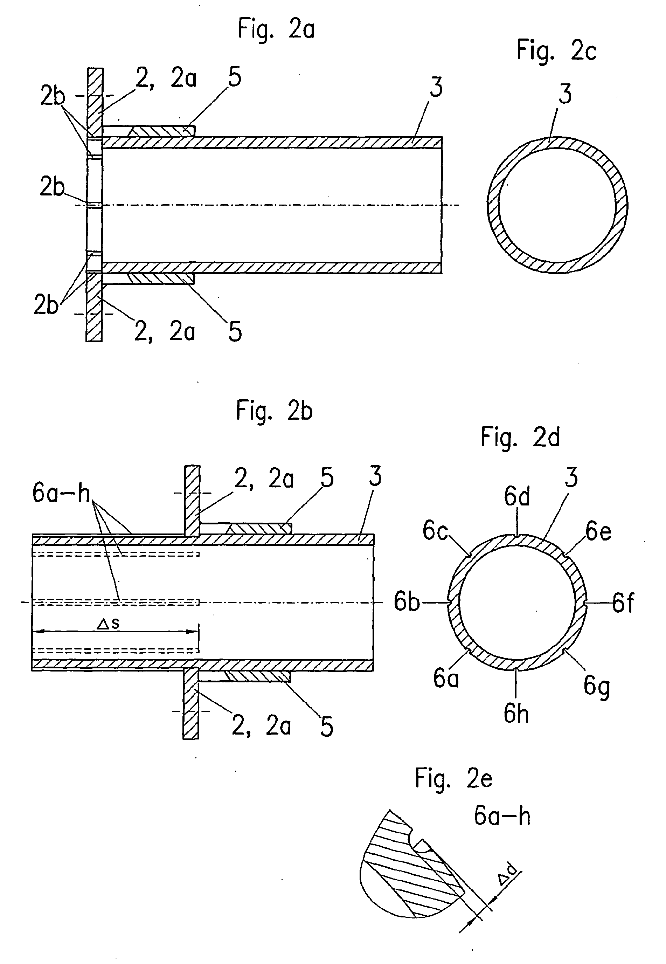

In Fig. 2a ist ein Längsschnitt durch einen rohrförmigen polymeren Energieabsorber 3 mit Führungshülse 5 vor einer Crashsituation zu sehen. Dabei ist der rohrförmige polymere Energieabsorber 3 form- und kraftschlüssig mit einer metallischen Grundplatte 2, mit Flansch 2a und spanabtragenden Elementen 2b verbunden und wird zusätzlich durch eine Führungshülse 5 lagestabil gehaltert. Nach einem erfolgten Crash zeigt Fig. 2b eine Endlage des rohrförmigen polymeren Energieabsorbers 3 in Richtung der durch den Crash bedingten Krafteinwirkung. Dabei wird der rohrförmige polymere Energieabsorber 3 um einen Weg Δs gegenüber der Ausgangsstellung in Richtung der Krafteinwirkung verschoben und die spanabtragenden Elemente 2b wirken entlang der polymeren Oberfläche materialabtragend und zerspanen diese, wie die gestrichelt gezeichneten Zerspanungsspuren 6a-h beispielhaft zeigen.

Zum besseren Verständnis ist der Querschnitt eines rohrförmigen polymeren Energieabsorbers 3 im Zustand vor dem Crash in Fig. 2c und nach dem Crash in Fig. 2d dargestellt.

Fig. 2d zeigt im Querschnitt die durch eine bevorzugte Ausführungsform von acht spanabtragenden Elementen 2b bewirkte Oberflächenzerspanung mit den Zerspanungsspurquerschnitten 6a-h nach der Krafteinwirkung im Crashfall.

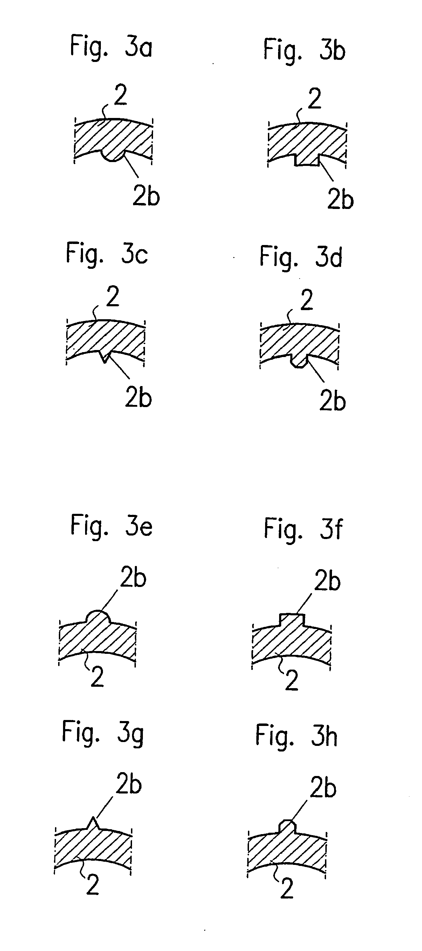

Die Materialeindringtiefe Δd, wie in Fig. 2e gezeigt, ist abhängig von den gewählten spanabtragenden Elementen 2b, deren geometrischen Form (siehe Fig. 3a-h) und den verwendeten Polymermaterialien nach Patentanspruch 1 bis 8.

Die Figuren 3a-d zeigen verschiedene geometrische Formen von spanabtragenden Elementen 2b in halbrundförmiger (Fig. 3a), rechteckförmiger (Fig. 3b), dreieckförmiger (Fig. 3c) und mehreckförmiger (Fig. 3d) Ausbildung für den Fall der Zerspanung an der Außenoberfläche an einem polymeren Energieabsorber 3 und die Figuren 3e-h die entsprechenden spanabtragenden Elemente 2b für den Fall der Zerspanung an der Innenoberfläche des polymeren Energieabsorbers 3.

Die Länge der spanabtragenden Elemente 2b ergibt sich für beide Anwendungen, d.h. in einer Außen- und/oder Innenanordnung, aus der geometrischen Form der spanabtragenden Elemente und der einstellbaren Materialeindringtiefe Δd, so dass bei einem Zerspanungswinkel im Bereich von 45-90° Grad der spanabtragenden Elemente 2b im Crashfall und in Abhängigkeit von der gewählten Rohrwandstärke des polymeren Energieabsorbers nach Anspruch 10, die Absorption der Crashenergie gewährleistet ist.

In Fig.4 ist beispielhaft ein experimentell ermitteltes Kraft-Flächen-Verhältnis eines polymeren Energieabsorbers für Kräfte von 0 - 90 kN und spanabtragende Elemente 2b nach Fig. 3a für ein polymeres Material nach Patentanspruch 3 in Abhängigkeit von der (materialabgetragenen) gespanten Fläche dargestellt. Dabei zeigte sich, dass der erfindungsgemäße Energieabsorber bei ansteigendem Kraftniveau, einen linear ansteigenden Flächenabtrag entlang der polymeren Oberfläche bewirkt.

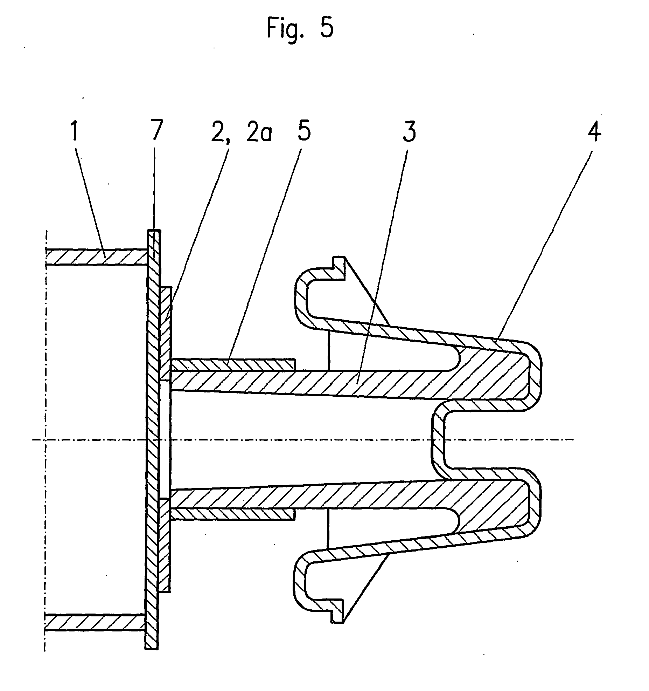

Fig.5 stellt eine einstückig, form- und kraftschlüssig ausgeführte Anbindung des polymeren Energieabsorbers 3 an einen Stoßfängerträger 4 beispielhaft dar. Die kraftschlüssige Befestigung der metallischen Grundplatte, 2 mit Flansch 2a, des Energieabsorbers 3, erfolgt bspw. an der Längsträgerachse bzw. an einer bevorzugten Tragstruktur des Kraftfahrzeuges durch Befestigungselemente, wobei das gegenüberliegende Ende des polymeren Energieabsorbers einstückig an den Stoßfängerträger angeformt ist und bei der Herstellung des Stoßfängersystems im Spritzgussverfahren gleich mit angeformt werden kann, so dass das Stoßfängersystem mit dem polymeren Energieabsorber bereits endgefertigt wird.

Die in den Ausführungsbeispielen in der Fig. 1, 2a,b und 5 dargestellte Führungshülse 5 ist bspw. metallisch ausgeführt und die Führungshülse 5 lässt durch die einstückige Verbindung an der Grundplatte 2 mit Flansch 2a, die an der Tragstruktur 1 eines Kraftfahrzeuges befestigt ist, eine axiale Bewegung des polymeren Energieabsorbers zu und wirkt im Falle der Krafteinwirkung im Crashfall als Momentenabstützung.

### Bezugszeichenliste

- 1: Fahrzeugstruktur
- 2,2': metallische Grundplatte
- 2a,2a': Flansch (mit Verbindungselementen)
- 2b,2b': spanabtragende Elemente
- 3, 3': rohrförmiger polymerer Energieabsorber
- 4: Stoßfängerträger
- 5: metallische Führungshülse
- 6a-h: Zerspanungsspuren
- 7: Fahrzeugstruktur mit Befestigungselementen
- Δs: Weg der Verschiebung nach Krafteinwirkung
- Δd: Materialeindringtiefe der spanabtragenden Elemente

## Patentansprüche

1. Energieabsorber für Kraftfahrzeuge, der ein rohrförmiges längsverschiebliches Element (3) und eine metallische Grundplatte (2) mit einem Flansch (2a) und einer mittleren Öffnung aufweist, **dadurch gekennzeichnet, dass** das Element (3) aus Polymermaterial besteht, dass spanabtragende Elemente (2b) umfänglich, form- und stoffschlüssig entlang der mittleren Öffnung angeordnet sind und dass sie in dieser Anordnung das rohrförmige Element (3) kraftschlüssig umfassen und eine Energieabsorption entlang der Längsrichtung des rohrförmigen Elementes (3) im Crashfall durch spanende Materialabtragung bewirken.

2. Energieabsorber für Kraftfahrzeuge nach Anspruch 1, **dadurch gekennzeichnet, dass** angepasst an das Kraftfahrzeuggewicht und den Kraftfahrzeugtyp, rohrförmige thermoplastische oder duroplastische Werkstoffe verwendet werden.

3. Energieabsorber für Kraftfahrzeuge nach Anspruch 1 bis 2, **dadurch gekennzeichnet, dass** das rohrförmige Polymermaterial für den polymeren Energieabsorber aus einem der Werkstoffe der Gruppe der Polyvinylchloride (PVC), Polyethylene (PE), Polypropylene (PP), Polyamide (PA), Polycarbonate (PC), Polyethylenterephthalate (PET), Polybutylenenterephthalate (PBT), Polymethylmethacrylate (PMMA), Polyoxymethylene (POM), Styrolcopolymerisate (Acrylnitril-Styral-Butadin-Copolymer und Copolymer aus Styrol und Acrylnitril) und Blends (ABS/PC und PBT/PC) besteht.

4. Energieabsorber für Kraftfahrzeuge nach Anspruch 1 bis 2, **dadurch gekennzeichnet, dass** das rohrförmige Polymermaterial für den polymeren Energieabsorber aus einem Hochleistungspolymerwerkstoff der Gruppe der Polyetherketone (PEK, PEEK), Polyimide und deren Copolymere besteht.

5. Energieabsorber für Kraftfahrzeuge nach Anspruch 1 bis 4, **dadurch gekennzeichnet, dass** Mischpolymere als Werkstoff für das rohrförmige Polymermaterial des Energieabsorbers verwendet sind.

6. Energieabsorber für Kraftfahrzeuge nach Anspruch 3 bis 5, **dadurch gekennzeichnet, dass** eine Zugabe von anorganischen Füllstoffen, wie Kreide, Talkum, Kohlefasern, Glasfasern, Glimmer, Silikaten, Aluminiumnitrit und -silikat und metallische Mikropartikel, die mechanische Festigkeit und Steifigkeit des rohrförmigen Polymermaterials des Energieabsorbers verbessern.

7. Energieabsorber für Kraftfahrzeuge nach Anspruch 6, **dadurch gekennzeichnet, dass** der Anteil der zugegebenen anorganischen Füllstoffe im Bereich von 3 bis 40 Gewichtsprozenten bezogen auf das Molgewicht des verwendeten rohrförmigen Polymermaterials des Energieabsorbers ist.

8. Energieabsorber für Kraftfahrzeuge nach Anspruch 3 bis 5, **dadurch gekennzeichnet, dass** Nano-Füllstoffe, wie TiO₂ Ruß, Kieselsäure und Tonmineralien mit Partikelgrößen von 80-150 nm und einem Füllstoffanteil von 3-15 Gewichtsprozenten bezogen auf das Molgewicht des verwendeten rohrförmigen Polymermaterials des Energieabsorbers zugegeben werden.

9. Energieabsorber für Kraftfahrzeuge nach Anspruch 1 bis 8, **dadurch gekennzeichnet, dass** der Rohraußendurchmesser eines rohrförmigen polymeren Energieabsorbers im Bereich von 4 bis 10 cm liegt.

10. Energieabsorber für Kraftfahrzeuge nach Anspruch 1 bis 9, **dadurch gekennzeichnet, dass** die Rohrwandstärke eines rohrförmigen polymeren Energieabsorbers 0,5 bis 10 cm (entsprechend Vollmaterialstärke) umfasst

11. Energieabsorber für Kraftfahrzeuge nach Anspruch 1 bis 10, **dadurch gekennzeichnet, dass** die Rohrgesamtlänge eines rohrförmigen polymeren Energieabsorbers entsprechend der Auslegung für eine Energieabsorption von bis zu 20 kJ im Bereich von 35 bis 200 mm liegt.

12. Energieabsorber für Kraftfahrzeuge nach Anspruch 11, **dadurch gekennzeichnet, dass** die Gesamtlänge eines rohrförmigen polymeren Energieabsorbers vorzugsweise im Bereich von 100-170 mm liegt und abhängig ist von der konstruktiv vorgegebenen Einbauraumsituation eines Kraftfahrzeuges, der zu absorbierenden Energien und der Auslegung für einen Crash-Geschwindigkeitsbereich von bis zu 20 km/h umfasst.

13. Energieabsorber für Kraftfahrzeuge nach Anspruch 1 bis 12, **dadurch gekennzeichnet, dass** der rohrförmige polymere Energieabsorber aus mindestens zwei Schichten mit gleicher und/oder verschiedener Schichtdicke und aus gleichen und/oder unterschiedlichen polymeren Werkstoffen nach Anspruch 3 bis 5 besteht.

14. Energieabsorber für Kraftfahrzeuge nach einem der vorgenannten Ansprüche, **dadurch gekennzeichnet, dass** die Dichte der verwendeten thermoplastischen und/oder duroplastischen Werkstoffe für den Mehrschichtaufbau des polymeren Energieabsorbers im Bereich von 0,82 bis 1,48 *g*/*cm³* liegt.

15. Energieabsorber für Kraftfahrzeuge nach einem der vorgenannten Ansprüche, **dadurch gekennzeichnet, dass** eine metallische Einlage und/oder Gewebearmierung ganz oder partiell auf eine Trägerschicht in einem Mehrschichtaufbau zur Verbesserung der Querkraftsteifigkeit nach Patentanspruch 13 aufgebracht wird.

16. Energieabsorber für Kraftfahrzeuge nach Anspruch 1 bis 12, **dadurch gekennzeichnet, dass** ein aus Metall bestehender rohrförmiger Grundkörper gemäß Patentanspruch 13 beschichtet ist und die aufgebrachten Polymerschichten die energieabsorbierenden Zerspanungsschichten sind.

17. Energieabsorber für Kraftfahrzeuge nach Anspruch 1 bis 16, **dadurch gekennzeichnet, dass** die geometrische Querschnittsform kreisförmig, U-förmig, trapezförmig, rechteckförmig oder ellipsenförmig für den rohrförmigen Energieabsorber ausgebildet ist.

18. Energieabsorber für Kraftfahrzeuge nach Anspruch 1 bis 17, **dadurch gekennzeichnet, dass** ein rohrförmiger polymerer Energieabsorber im Extrusions-, Co-Extrusions- und/oder Spritzgussverfahren hergestellt wird.

19. Energieabsorber für Kraftfahrzeuge nach Anspruch 1 bis 18, **dadurch gekennzeichnet, dass** entlang der Längsrichtung der Polymerrohroberfläche des Energieabsorbers, mittels einer Anzahl von spanabtragender Elemente 2b, die kraftschlüssig mit der Polymerrohroberfläche verbunden sind, eine Energieabsorption durch Materialabtragung für Aufprallgeschwindigkeiten von bis zu 20 km/h erreicht wird.

20. Energieabsorber für Kraftfahrzeuge nach einem der vorgenannten Ansprüche, **dadurch gekennzeichnet, dass** durch die Anzahl, die geometrische Form und Schnitttiefe (Eindringtiefe) der spanabtragenden Elemente 2b eine Energieabsorption von bis zu 20 kJ einstellbar ist.

21. Energieabsorber für Kraftfahrzeuge nach einem der vorgenannten Ansprüche, **dadurch gekennzeichnet, dass** die spanabtragenden Elemente 2b entlang der rohrförmigen polymeren Innenoberfläche oder in einer Kombinationsanordnung an der Außen- und Innenoberfläche nach Patentanspruch 1 energieabsorbier-end wirken.

22. Energieabsorber für Kraftfahrzeuge nach Anspruch 19 bis 21, **dadurch gekennzeichnet, dass** die Anzahl der spanabtragenden Elemente 2b im Bereich von 4 bis 40 liegt.

23. Energieabsorber für Kraftfahrzeuge nach Anspruch 22, **dadurch gekennzeichnet, dass** 8 bis 16 symmetrisch und äquidistant angeordnete spanabtragende Elemente 2b umfänglich angeordnet sind.

24. Energieabsorber für Kraftfahrzeuge nach Anspruch 22 **dadurch gekennzeichnet, dass** der Abstand der einzelnen spanabtragenden Elemente 2b zueinander im Bereich von 2,5 bis 25%, bezogen auf den rohrförmigen polymeren Energieabsorberaußen- und/oder -innenumfang, ist.

25. Energieabsorber für Kraftfahrzeuge nach einem der vorgenannten Ansprüche, **dadurch gekennzeichnet, dass** die spanabtragenden Elemente 2b rechteck-, dreieck-, trapezmehreck- oder halbrundförmig geformt sind und einen Spanungswinkel relativ zur Normalen der rohrförmigen polymeren Energieabsorberaußen- oder -innenoberfläche von 45-90 Grad bilden.

26. Energieabsorber für Kraftfahrzeuge nach einem der vorgenannten Ansprüche, **dadurch gekennzeichnet, dass** die Länge eines spanabtragenden Elementes 2b angepasst an die Rohrwandstärke des polymeren Energieabsorbers 0,5-3 cm ist und eine Materialeindringtiefe Δd von 0,15 bis 1,5 cm bewirkt.

27. Energieabsorber für Kraftfahrzeuge nach einem der vorgenannten Ansprüche, **dadurch gekennzeichnet, dass** Metall, oder Metalllegierungen oder Keramiken als Material für die spanabtragenden Elemente 2b verwendet werden.

28. Energieabsorber für Kraftfahrzeuge nach einem der vorgenannten Ansprüche, **dadurch gekennzeichnet, dass** eine Führungshü!se 5 einstückig an der metallischen Grundplatte 2 mit Flansch 2a befestigt ist und eine axial geführte Bewegung des rohrförmigen polymeren Energieabsorbers erreicht ist und die Führungshülse 5 im Crashfall als Momentenabstützung wirkt.

29. Stoßfängersystem für Kraftfahrzeuge, aufweisend mindestens zwei polymere Energieabsorber nach einem der Ansprüche 1 bis 28.

30. Stoßfängersystem für Kraftfahrzeuge nach Anspruch 29, **dadurch gekennzeichnet, dass** die polymeren Energieabsorber vor einen Fahrzeuglängsträger angeordnet werden und die Verbindung der rohrförmigen polymeren Energieabsorber form- und/oder kraftschlüssig durch den Flansch 2a der metallischen Grundplatte 2 des Energieabsorbers an eine dahinterliegende Fahrzeugstruktur 7 mittels Befestigungselemente erfolgt.

31. Stoßfängersystem für Kraftfahrzeuge nach Anspruch 29 bis 30, **dadurch gekennzeichnet, dass** die Energieabsorber einstückig mit dem Stoßfängerträger verbunden sind und eine Anbindung an den Stoßfängerträger form- und stoffschlüssig oder form- und kraftschlüssig ausgeführt ist.

32. Stoßfängersystem für Kraftfahrzeuge nach Anspruch 29 bis 31, **dadurch gekennzeichnet, dass** das Stoßfängersystem für den Heckbereich eines Kraftfahrzeuges eingesetzt wird.

## Claims

1. Energy absorber for motor vehicles, which has a tubular longitudinally displaceable element (3) and a metallic base plate (2) with a flange (2a) and a central opening, **characterized in that** the element (3) consists of polymer material, **in that** material-removing elements (2b) are arranged peripherally along the central opening in a form-fitting and material-bonding manner and **in that** in this arrangement they enclose the tubular element (3) with a force fit and, in the event of a crash, bring about an energy absorption along the longitudinal direction of the tubular element (3) by removal of material in chip form.

2. Energy absorber for motor vehicles according to Claim 1, **characterized in that** tubular thermoplastic or thermosetting materials are used, adapted to the weight of the vehicle and the type of vehicle.

3. Energy absorber for motor vehicles according to Claims 1 and 2, **characterized in that** the tubular polymer material for the polymer energy absorber comprises one of the materials of the group comprising polyvinyl chlorides (PVC), polyethylenes (PE), polypropylenes (PP), polyamides (PA), polycarbonates (PC), polyethylene terephthalates (PET), polybutylene terephthalates (PBT), polymethylmethacrylates (PMMA), polyoxymethylenes (POM), styrene copolymers (acrylonitrile styrene butadiene copolymers and copolymers comprising styrene and acrylonitrile) and blends (ABS/PC and PBT/PC).

4. Energy absorber for motor vehicles according to Claims 1 and 2, **characterized in that** the tubular polymer material for the polymer energy absorber comprises a high-performance polymer material of the group comprising polyether ketones (PEK, PEEK), polyimides and their copolymers.

5. Energy absorber for motor vehicles according to Claims 1 to 4, **characterized in that** mixed polymers are used as the material for the tubular polymer material of the energy absorber.

6. Energy absorber for motor vehicles according to Claims 3 to 5, **characterized in that** an addition of inorganic fillers, such as chalk, talc, carbon fibres, glass fibres, mica, silicate, aluminium nitrite and silicate and metallic microparticles, improves the mechanical strength and rigidity of the tubular polymer material of the energy absorber.

7. Energy absorber for motor vehicles according to Claim 6, **characterized in that** the proportion of added inorganic fillers is in the range from 3 to 40 per cent by weight, referred to the molecular weight of the tubular polymer material used for the energy absorber.

8. Energy absorber for motor vehicles according to Claims 3 to 5, **characterized in that** nanofillers, such as TiO₂, carbon black, silica and clay minerals with particle sizes of 80-150 nm are added in a proportion of fillers of 3-15 per cent by weight, referred to the molecular weight of the tubular polymer material used for the energy absorber.

9. Energy absorber for motor vehicles according to Claims 1 to 8, **characterized in that** the outer tube diameter of a tubular polymer energy absorber lies in the range from 4 to 10 cm.

10. Energy absorber for motor vehicles according to Claims 1 to 9, **characterized in that** the tube wall thickness of a tubular polymer energy absorber is 0.5 to 10 cm (corresponding to solid material thickness).

11. Energy absorber for motor vehicles according to Claims 1 to 10 , **characterized in that** the overall tube length of a tubular polymer energy absorber corresponding to the design for an energy absorption of up to 20 kJ lies in the range from 35 to 200 mm.

12. Energy absorber for motor vehicles according to Claim 11, **characterized in that** the overall length of a tubular polymer energy absorber preferably lies in the range of 100-170 mm and is dependent on the design-dictated installation situation of a motor vehicle, the energies to be absorbed and the design for a crash speed range of up to 20 km/h.

13. Energy absorber for motor vehicles according to Claims 1 to 12, **characterized in that** the tubular polymer energy absorber comprises at least two layers with the same layer thickness and/or different layer thicknesses and consists of the same polymer material and/or different polymer materials according to Claims 3 to 5.

14. Energy absorber for motor vehicles according to one of the preceding claims, **characterized in that** the density of the thermoplastic and or thermosetting materials used for the multilayer structure of the polymer energy absorber lies in the range from 0.82 to 1.48 g/cm³.

15. Energy absorber for motor vehicles according to one of the preceding claims, **characterized in that** a metal insert and/or fabric reinforcement is applied completely or partially to a carrier layer in a multilayer structure to improve the lateral force rigidity according to Patent Claim 13.

16. Energy absorber for motor vehicles according to Claims 1 to 12, **characterized in that** a tubular basic body consisting of metal according to Patent Claim 13 is coated and the applied polymer layers are the energy-absorbing material-removal layers.

17. Energy absorber for motor vehicles according to Claims 1 to 16, **characterized in that** the geometric cross-sectional shape is designed to be circular, U-shaped, trapezoidal, rectangular or ellipsoidal for the tubular energy absorber.

18. Energy absorber for motor vehicles according to Claims 1 to 17, **characterized in that** a tubular polymer energy absorber is produced by the extrusion, co-extrusion and/or injection-moulding process.

19. Energy absorber for motor vehicles according to Claims 1 to 18, **characterized in that** the energy absorption is achieved by material removal for collision speeds of up to 20 km/h along the longitudinal direction of the polymer tube surface of the energy absorber, by means of a number of material-removing elements 2b, which are connected to the polymer tube surface with a force fit.

20. Energy absorber for motor vehicles according to one of the preceding claims, **characterized in that** an energy absorption of up to 20 kJ can be set by the number, the geometric shape and the depth of cut (depth of penetration) of the material-removing elements 2b.

21. Energy absorber for motor vehicles according to one of the preceding claims, **characterized in that** the material-removing elements 2b act in an energy-absorbing manner according to Patent Claim 1 along the tubular polymer inner surface or in a combination arrangement on the outer surface and inner surface.

22. Energy absorber for motor vehicles according to Claims 19 to 21, **characterized in that** the number of material-removing elements 2b lies in the range from 4 to 40.

23. Energy absorber for motor vehicles according to Claim 22, **characterized in that** 8 to 16 symmetrically equidistantly arranged material-removing elements 2b are peripherally arranged.

24. Energy absorber for motor vehicles according to Claim 22, **characterized in that** the distance of the individual material-removing elements 2b from one another is in the range from 2.5 to 25%, referred to the outer and/or inner circumference of the tubular polymer energy absorber.

25. Energy absorber for motor vehicles according to one of the preceding claims, **characterized in that** the material-removing elements 2b are shaped in a rectangular, triangular, trapezoidal, polygonal or half-round form and form a material-removing angle of 45-90 degrees in relation to the normal to the outer and/or inner surface of the tubular polymer energy absorber.

26. Energy absorber for motor vehicles according to one of the preceding claims, **characterized in that** the length of a material-removing element 2b, adapted to the tube wall thickness of the polymer energy absorber, is 0.5-3 cm and brings about a material penetration depth Δd of 0.15 to 1.5 cm.

27. Energy absorber for motor vehicles according to one of the preceding claims, **characterized in that** metal or metal alloys or ceramics are used as the material for the material-removing elements 2b.

28. Energy absorber for motor vehicles according to one of the preceding claims, **characterized in that** a guide sleeve 5 is integrally fastened to the metallic base plate 2 with flange 2a and an axially guided movement of the tubular polymer energy absorber is achieved and, in the event of a crash, the guide sleeve 5 acts as a momentum support.

29. Bumper system for motor vehicles, comprising at least two polymer energy absorbers according to one of Claims 1 to 28.

30. Bumper system for motor vehicles according to Claim 29, **characterized in that** the polymer energy absorber is arranged in front of a longitudinal member of the vehicle frame and the connection of the tubular polymer energy absorber is performed with a form fit and/or force fit by the flange 2a of the metallic base plate 2 of the energy absorber to a vehicle structure 7 lying behind, by means of fastening elements.

31. Bumper system for motor vehicles according to Claims 29 and 30, **characterized in that** the energy absorber is integrally connected to the bumper support and a connection is made to the bumper support in a form-fitting and material-bonding manner or a form-fitting and force-fitting manner.

32. Bumper system for motor vehicles according to Claims 29 to 31, **characterized in that** the bumper system is used for the rear region of a motor vehicle.

## Revendications

1. Absorbeur d'énergie pour des véhicules automobiles, qui comprend un élément tubulaire coulissant longitudinalement (3) et une plaque de base métallique (2) avec une bride (2a) et une ouverture centrale, **caractérisé en ce que** l'élément (3) se compose d'une matière polymère, **en ce que** des éléments (2b) d'enlèvement de copeaux sont disposés en périphérie, en complémentarité de forme et de matière avec l'ouverture centrale, et **en ce qu'**ils entourent dans cette disposition l'élément tubulaire (3) en complémentarité de force et opèrent une absorption d'énergie le long de la direction longitudinale de l'élément tubulaire (3) en cas de collision, par enlèvement de matière sous forme de copeaux.

2. Absorbeur d'énergie pour des véhicules automobiles selon la revendication 1, **caractérisé en ce que** l'on utilise des matériaux tubulaires thermoplastiques ou thermodurcissables, adaptés au poids du véhicule et au type de véhicule.

3. Absorbeur d'énergie pour des véhicules automobiles selon une revendication 1 à 2, **caractérisé en ce que** la matière polymère tubulaire utilisée pour l'absorbeur d'énergie polymère se compose d'une des matières du groupe des chlorures de polyvinyle (PVC), polyéthylènes (PE), polypropylènes (PP), polyamides (PA), polycarbonates (PC), polyéthylène téréphtalates (PET), polybutylène téréphtalates (PBT), polyméthylméthacrylates (PMMA), polyoxyméthylènes (POM), styrocopolymérisats (copolymère acrylnitrile-styrène-butadiène et copolymère de styrène et acrylnitrile) et des mélanges (ABS/PC et PBT/PC).

4. Absorbeur d'énergie pour des véhicules automobiles selon une revendication 1 à 2, **caractérisé en ce que** la matière polymère tubulaire utilisée pour l'absorbeur d'énergie polymère se compose d'une matière polymère à grande puissance du groupe des polyéthercétones (PEK, PEEK), polyimides et de leurs copolymères.

5. Absorbeur d'énergie pour des véhicules automobiles selon une revendication 1 à 4, **caractérisé en ce que** l'on utilise des polymères mixtes comme matériau pour la matière polymère tubulaire de l'absorbeur d'énergie.

6. Absorbeur d'énergie pour des véhicules automobiles selon une revendication 3 à 5, **caractérisé en ce qu'**une addition de charges minérales, comme de la craie, du talc, des fibres de carbone, des fibres de verre, du mica, des silicates, du nitrite et du silicate d'aluminium et des microparticules métalliques, améliore la résistance mécanique et la rigidité de la matière polymère tubulaire de l'absorbeur d'énergie.

7. Absorbeur d'énergie pour des véhicules automobiles selon la revendication 6, ' **caractérisé en ce que** la proportion des charges minérales ajoutées est de l'ordre de 3 à 40 pour cent en poids par rapport au poids moléculaire de la matière polymère tubulaire utilisée pour l'absorbeur d'énergie.

8. Absorbeur d'énergie pour des véhicules automobiles selon une revendication 3 à 5, **caractérisé en ce que** l'on ajoute des nanocharges, comme du TiO₂, de la suie, de l'acide silicique ou des minéraux d'argile avec des grosseurs de particules de 80-150 nm dans une proportion de charge de 3-15 pour cent en poids par rapport au poids moléculaire de la matière polymère tubulaire utilisée pour l'absorbeur d'énergie.

9. Absorbeur d'énergie pour des véhicules automobiles selon une revendication 1 à 8, **caractérisé en ce que** le diamètre extérieur du tube d'un absorbeur d'énergie polymère tubulaire se situe dans la gamme de 4 à 10 cm.

10. Absorbeur d'énergie pour des véhicules automobiles selon une revendication 1 à 9, **caractérisé en ce que** l'épaisseur de la paroi du tube d'un absorbeur d'énergie polymère tubulaire vaut de 0,5 à 10 cm (selon l'épaisseur de matière pleine).

11. Absorbeur d'énergie pour des véhicules automobiles selon une revendication 1 à 10, **caractérisé en ce que** la longueur totale du tube d'un absorbeur d'énergie polymère tubulaire se situe dans la gamme de 35 à 200 mm, selon la conception prévue pour une absorption d'énergie jusque 20 kJ.

12. Absorbeur d'énergie pour des véhicules automobiles selon la revendication 11, **caractérisé en ce que** la longueur totale d'un absorbeur d'énergie polymère tubulaire se situe de préférence dans la gamme de 100-170 mm et dépend de l'espace de montage prédéterminé par la construction d'un véhicule automobile, des énergies à absorber et de la conception pour un domaine de vitesse de collision jusque 20 km/h.

13. Absorbeur d'énergie pour des véhicules automobiles selon une revendication 1 à 12, **caractérisé en ce que** l'absorbeur d'énergie polymère tubulaire se compose d'au moins deux couches d'épaisseur égale et/ou différente et de matériaux polymères identiques et/ou différents selon une revendication 3 à 5.

14. Absorbeur d'énergie pour des véhicules automobiles selon l'une quelconque des revendications précédentes, **caractérisé en ce que** la densité des matériaux thermoplastiques et/ou thermodurcissables utilisés pour la structure multicouche de l'absorbeur d'énergie polymère se situe dans la gamme de 0,82 à 1,48 g/cm³.

15. Absorbeur d'énergie pour des véhicules automobiles selon l'une quelconque des revendications précédentes, **caractérisé en ce qu'**un insert et/ou une armature en treillis métallique est appliqué(e), totalement ou partiellement sur une couche de support dans une structure multicouche pour améliorer la rigidité aux forces transversales selon la revendication 13.

16. Absorbeur d'énergie pour des véhicules automobiles selon une revendication 1 à 12, **caractérisé en ce qu'**un corps de base tubulaire, composé de métal, est revêtu selon la revendication 13 et les couches de polymère déposées sont des couches d'enlèvement de copeaux absorbant l'énergie.

17. Absorbeur d'énergie pour des véhicules automobiles selon une revendication 1 à 16, **caractérisé en ce que** la forme géométrique de la section transversale de l'absorbeur d'énergie est circulaire, en U, trapézoïdale, rectangulaire ou elliptique.

18. Absorbeur d'énergie pour des véhicules automobiles selon une revendication 1 à 17, **caractérisé en ce que** l'on fabrique un absorbeur d'énergie polymère tubulaire par un procédé d'extrusion, de co-extrusion et/ou de projection.

19. Absorbeur d'énergie pour des véhicules automobiles selon une revendication 1 à 18, **caractérisé en ce que** l'on atteint une absorption d'énergie par enlèvement de matière pour des vitesses de collision jusque 20 km/h le long de la direction longitudinale de la surface du tube polymère de l'absorbeur d'énergie, au moyen de plusieurs éléments d'enlèvement de copeaux 2b, qui sont assemblés par complémentarité de force à la surface du tube polymère.

20. Absorbeur d'énergie pour des véhicules automobiles selon l'une quelconque des revendications précédentes, **caractérisé en ce que** l'on peut régler une absorption d'énergie jusque 20 kJ par le nombre, la forme géométrique et la profondeur de coupe (profondeur de pénétration) des éléments d'enlèvement de copeaux 2b.

21. Absorbeur d'énergie pour des véhicules automobiles selon l'une quelconque des revendications précédentes, **caractérisé en ce que** les éléments d'enlèvement de copeaux 2b ont une action d'absorption d'énergie le long de la surface intérieure polymère tubulaire ou dans une disposition combinée sur la surface extérieure et la surface intérieure selon la revendication 1.

22. Absorbeur d'énergie pour des véhicules automobiles selon une revendication 19 à 21, **caractérisé en ce que** le nombre des éléments d'enlèvement de copeaux 2b est de l'ordre de 4 à 40.

23. Absorbeur d'énergie pour des véhicules automobiles selon la revendication 22, **caractérisé en ce que** 8 à 16 éléments d'enlèvement de copeaux 2b sont disposés en périphérie, de manière symétrique et équidistante.

24. Absorbeur d'énergie pour des véhicules automobiles selon la revendication 22, **caractérisé en ce que** la distance des éléments d'enlèvement de copeaux individuels 2b l'un par rapport à l'autre est de 2,5 à 25 %, par rapport à la périphérie extérieure et/ou intérieure de l'absorbeur d'énergie polymère tubulaire.

25. Absorbeur d'énergie pour des véhicules automobiles selon l'une quelconque des revendications précédentes, **caractérisé en ce que** les éléments d'enlèvement de copeaux 2b sont de forme rectangulaire, triangulaire, trapézoïdale, polygonale ou semi-circulaire, et forment un angle d'inclinaison de 45-90 degrés par rapport à la normale à la surface extérieure et/ou intérieure de l'absorbeur d'énergie polymère tubulaire.

26. Absorbeur d'énergie pour des véhicules automobiles selon l'une quelconque des revendications précédentes, **caractérisé en ce que** la longueur d'un élément d'enlèvement de copeaux 2b est de 0,5-3 cm, selon l'épaisseur de la paroi du tube de l'absorbeur d'énergie polymère, et assure une profondeur de pénétration dans la matière □d de 0,15 à 1,5 cm.

27. Absorbeur d'énergie pour des véhicules automobiles selon l'une quelconque des revendications précédentes, **caractérisé en ce que** l'on utilise un métal, des alliages métalliques ou des céramiques comme matière pour les éléments d'enlèvement de copeaux 2b.

28. Absorbeur d'énergie pour des véhicules automobiles selon l'une quelconque des revendications précédentes, **caractérisé en ce qu'**une douille de guidage 5 est fixée d'une seule pièce sur la plaque de base métallique 2 avec la bride 2a, on réalise un mouvement guidé axialement de l'absorbeur d'énergie polymère tubulaire et la douille de guidage 5 agit comme support de couple en cas de collision.

29. Système de pare-chocs pour des véhicules automobiles, comportant au moins deux absorbeurs d'énergie polymères selon l'une quelconque des revendications 1 à 28.

30. Système de pare-chocs pour des véhicules automobiles selon la revendication 29, **caractérisé en ce que** les absorbeurs d'énergie polymères sont disposés devant un longeron du véhicule et l'assemblage des absorbeurs d'énergie polymères tubulaires est réalisé en complémentarité de forme et/ou de force par la bride 2a de la plaque de base métallique 2 de l'absorbeur d'énergie à une structure du véhicule 7 située derrière, au moyen d'éléments de fixation.

31. Système de pare-chocs pour des véhicules automobiles selon une revendication 29 à 30, **caractérisé en ce que** les absorbeurs d'énergie sont assemblés d'une seule pièce au support de pare-chocs et une liaison au support de pare-chocs est réalisée en complémentarité de forme et de matière ou en complémentarité de forme et de force.

32. Système de pare-chocs pour des véhicules automobiles selon une revendication 29 à 31, **caractérisé en ce que** le système de pare-chocs est utilisé pour la partie arrière d'un véhicule automobile.
